# EUROPÄISCHE PATENTSCHRIFT

(11) **EP 1 380 784 B1**
(45) Veröffentlichungstag und Bekanntmachung des Hinweises auf die Patenterteilung: **26.12.2007**
(21) Anmeldenummer: 03015048.6
(22) Anmeldetag: 03.07.2003
(51) Int. Cl.: F16L 3/00, F16L 23/04, B25J 19/00, H02G 3/00

(54) **Halteschelle**
Holding clamp
Collier de retenue

(30) Priorität: 13.07.2002 DE 10231724
(43) Veröffentlichungstag der Anmeldung: 14.01.2004
(73) Patentinhaber: KUKA Roboter GmbH, 86165 Augsburg (DE)
(72) Erfinder: Karlinger, Stefan, 86199 Augsburg (DE)
(74) Vertreter: Lempert, Jost

(56) Entgegenhaltungen:
- EP-A- 1 163 986
- DE-U- 29 902 947
- FR-A- 2 504 645
- GB-A- 1 045 690

## Beschreibung

Die Erfindung betrifft eine Anordnung nach dem Oberbegriff des Anspruchs 1.

Halteschellen solcher Anordnungen werden unter anderem dazu eingesetzt, Versorgungsleitungen, Kabel und/oder diese umfassende Schläuche an einem Gegenstand, wie einer Maschine, insbesondere aber auch einem Roboter, zu halten, um die Kabel, Leitungen, Schläuche in einer vorgesehenen Weise am sie haltenden Gegenstand, wie einem Roboter, entlang zu führen. In einem Schlauch entlang einer Maschine oder einem Roboter geführte versorgungsleitungen und Kabel für ein Werkzeug der Maschine bzw. des Roboters treten in dem Bereich des Werkzeugs aus dem sie führenden Schlauch aus und werden vereinzelt. Sie müssen dabei einzeln zugentlastet gehalten werden. Der die Leitungen und Kabel zuführende Schutzschlauch muss im Austrittsbereich der Leitungen bzw. Kabel sehr beweglich gehalten werden. Dies geschieht in der Regel durch ein Kugelgelenk.

Zur Halterung werden hintereinander angeordnete Schellen oder aber kompliziert aufgebaute Schellen vorgesehen. Eine derartige Schelle ist in der EP 1 163 986 A2 (insbesondere Fig. 10) dargestellt. Die Schelle weist eine Nase 53 auf, die in einer Ringnut eines Zugentlastungsmittels in Form einer Kabelnuss eingreift und dieses axial festlegt. Weiterhin ist ein von der Schelle ebenfalls über eine Nase axial festgelegter Adapterring vorgesehen, der sich an dem der Kabelnuss abgewandten Ende der Schelle radial weiter und einen Flansch eines Halteteils für den Schutzschlauch hintergreift. Nachteilig ist der, wie vorstehend gesagt, komplizierte Aufbau dieser Schelle.

Die GB 1,045,690 zeigt eine Kupplung zum Verbinden zweier Rohre, die jeweils mit einem Ringflansch versehen sind. Zwischen den Stirnseiten der Rohrenden und den Ringflanschen ist ein Dichtring angeordnet. Die Kupplung übergreift die beiden Ringflansche an den Rohrenden und weist mittig zwischen diesen eine nach innen ragende in die Dichtung eindrückende Kante auf.

Der Erfindung liegt, ausgehend von der EP 1 163 986 A2 die Aufgabe zugrunde, eine konstruktiv einfach ausgebildete Schelle zu schaffen, die dennoch die genannten Anforderungen, nämlich insbesondere die relativ bewegliche Lagerung des Endes des Schutzschlauches und Zugentlastung der aus diesem herausgeführten Einzelkabel, in optimaler Weise gewährleistet.

Erfindungsgemäß wird die genannte Aufgabe mit gattungsgemäßer Halteschelle gelöst, welche das kennzeichnende Merkmal des Anspruchs 1 aufweist.

Die Erfindung sieht also vor, dass die Halteschelle in axialer Richtung zwei hintereinander angeordnete Halte- oder Aufnahmebereiche ausweist, die durch einen umlaufenden, radial nach innen gerichteten Ringsteg voneinander getrennt sind. Der eine Haltebereich dient zur Aufnahme des Endes des Schutzschlauches, insbesondere eines an diesem vorgesehenen kalotten- oder teilkugelförmigen Ringes, über den die angulare Beweglichkeit des Schutzschlauches sichergestellt wird. Der zweite Aufnahmebereich dient zur Aufnahme einer Kabelnuss mit Durchbrüchen für die einzelnen Kabel, die über eine Spannschelle in der Kabelnuss fest verspannt werden können, so dass sie in dieser kraftschlüssig und damit zugentlastet gehalten werden. Zur Ermöglichung einer angularen Relativbeweglichkeit der zu verbindenden Teile sieht die Erfindung vor, dass der erste Aufnahmebereich teilkugelförmig ausgebildet ist.

In bevorzugter Ausgestaltung ist vorgesehen, dass in Axialabstand zum umlaufenden Ringsteg zumindest einer der Aufnahmebereiche weitere radial nach innen gerichtete Stege aufweist. Durch diese zusätzlichen Rippen wird eine axiale formschlüssige Festlegung der in die Aufnahmebereiche der Schelle eingelegten Teile - Kalottenring, Kabelnuss - sichergestellt. Dabei kann in einer Ausgestaltung vorgesehen sein, dass ein Steg des ersten Aufnahmebereiches durch eine nahe der Außenseite der Schelle ausgebildete Schulter gebildet ist, während weiterhin vorgesehen sein kann, dass im zweiten Aufnahmebereich über den Umfang der Schelle hin mit in Umfangsrichtung endlichem Abstand mehrere Stege nebeneinander angeordnet sind. Die entsprechend einzeln über den Innenumfang des zweiten Aufnahmebereichs der Halteschalle verteilten Rippen greifen in entsprechende Ausnehmungen am Außenumfang der Kabelnuss ein und liegen an einem Schulterbereich derselben an, so dass die Kabelnuss derart sicher formschlüssig in der Halteschelle gehalten wird.

In weiterer bevorzugter Ausgestaltung ist vorgesehen, dass der erste Aufnahmebereich teilkugelförmig ausgebildet ist.

Die erfindungsgemäße Schelle kann vorzugsweise als Kunststoff-Spritzgussteil ausgebildet sein.

Zur Befestigung an sie haltenden Teilen, wie einer Maschine oder einem Roboter, ist weiterhin vorgesehen, dass Befestigungsbohrungen zumindest in einem Schellenteil vorgesehen sind.

Die durch die in axialer Richtung hintereinander angeordneten beiden Aufnahmebereich relativ breit ausgebildete Schelle kann zu einer sicheren Anlenkung der beiden sie bildenden Schellenteile in verschiedener Weise ausgebildet sein. In einer bevorzugten Ausgestaltung ist vorgesehen, dass die Verbindung zweier Schellenteile durch ein Doppelgelenk vorgenommen wird, wobei insbesondere die zwei Schellenteile durch in axialer Richtung nebeneinander angeordnete Gelenkelemente aneinander angelenkt sind und die Gelenkelemente jeweils etwa auf axialer Höhe eines der Aufnahmebereiche angeordnet sind.

Zum Schließen der Schelle ist vorzugsweise eine Schließvorrichtung vorgesehen, die derart ausgebildet ist, dass eine Schließvorrichtung zum Schließen zweier aneinander angelenkter Schellenteile vorgesehen ist, wobei insbesondere vorgesehen ist, dass ein am Grundkörper angelenkter, über ein Widerlager am zweiten Schellenteil dieses in Schließstellung gegen das erste Schellenteil drückender Hebel zwei in etwa gleichlang ausgebildete winklig zueinander angeordnete Hebelarme aufweist, deren einer an seinem freien Ende am Grundteil angelenkt ist, während der andere mit seinem freien ende in Schließstellung am Grundteil lösbar befestigbar ist.

Diese bevorzugte Schließvorrichtung weist bei einer geringen Quer-Bauhöhe eine ausreichende Breite auf, um ein gleichmäßiges Schließen derselben über ihre Breite zu ermöglichen. Darüber hinaus besteht die Schließvorrichtung aus wenigen Einzelteilen, ist konstruktiv einfach und damit preiswert, ermöglicht gleichzeitig aber ein stabiles und sicheres Schließen, wobei ein unbeabsichtigtes Öffnen ausgeschlossen ist.

In bevorzugter Weiterbildung ist vorgesehen, dass die Hebelarme im wesentlichen mit einem Winkel von 90° zueinander ausgerichtet sind, wobei insbesondere ein dem ersten Hebelarm abgewandter Hebelabschnitt des zweiten Hebelarms auf den ersten Hebelarm zugerichtet sein kann, so dass der Relativwinkel zwischen dem ersten Hebelarm und dem abgewandten Abschnitt weniger als 90° beträgt, beispielsweise zwischen 80 und 87° liegen kann.

In weiterer bevorzugter Ausgestaltung ist vorgesehen, dass der erste Hebelarm über einen kurzen abgewinkelten Ansatz am Grundkörper angelenkt ist, wobei insbesondere der abgewinkelte Ansatz im wesentlichen parallel zum zweiten Hebelarm verläuft. Hierdurch wird sichergestellt, dass in einer Schließstellung der erste Hebelarm im wesentlichen parallel zu einer Oberkante des Grundkörpers verlaufen kann, so dass zwischen beiden ein Zwischenraum besteht; in der das Widerlager des zweiten zu schließenden Schellenteils eingreifen und der erste Hebelarm zum Schließen der Schellenteile an diesem Widerlager angreifen kann.

In weiterer bevorzugter Ausgestaltung der erfindungsgemäßen Vorrichtung ist vorgesehen, dass der abgewinkelte Ansatz mit seinem freien Ende am Grundkörper angelenkt ist.

Eine äußerst bevorzugte Ausgestaltung sieht vor, dass der abgewinkelte Ansatz mit einem exzentrischen Nocken im Bereich der Anlenkung versehen ist, der in maximaler Offenstellung des Hebels die Oberkante des Grundkörpers überragt. Hierdurch wird erreicht, dass, wenn die erfindungsgemäße Vorrichtung vollständig geöffnet wird, der Nocken das zweite Schellenteil vom ersten Schellenteil, an dem die erfindungsgemäße Schließvorrichtung angebracht ist, abdrücken kann und damit zwischen beiden Schellenteilen ein Zwischenraum entsteht, in den eingegriffen werden kann, um die beiden Schellenteile vollständig voneinander fortzuschwenken.

In weiterer bevorzugter Ausgestaltung ist eine Sperreinrichtung in Form eines parallel zur Schwenkachse des Hebels ausgerichteten, nachgiebig gelagerten Stiftes und eine diesen umgreifende Bohrung am freien Ende des Hebelarms vorgesehen. Hierdurch wird eine sichere Verriegelung der erfindungsgemäßen Vorrichtung und damit der zu schließenden Schellenteile geschaffen, die nur durch Einsatz eines zusätzlichen Werkzeugs, wie eines Stabes oder Schraubenziehers, der in die Öffnung zum erneuten Niederdrücken des Stiftes zwecks Öffnen der erfindungsgemäßen Vorrichtung eingreift, geöffnet werden kann.

Eine weitere bevorzugte erfindungsgemäße Ausgestaltung sieht vor, dass das freie Ende des zweiten Hebels einen an seiner Ebene abgewinkelten Ansatz aufweist, wobei die Einzelteile des Grundkörpers miteinander vernietet sind. Hierdurch wird erreicht, dass der Stift alleine beim Niederdrücken des schwenkbaren Hebels zum Schließen in eine Freigabestellung zurückgedrückt wird, aus der er dann, sobald die erwähnte Bohrung konzentrisch zu ihm angeordnet ist, in diese zurückspringen kann, um den Schließ- und Sperrvorgang zu vollenden.

Das Schließen der erfindungsgemäßen Schließvorrichtung wird dadurch erleichtert, dass der zweite Hebelarm an seinem freien Ende einen Griffansatz aufweist. Der Grundkörper der erfindungsgemäßen Schließvorrichtung kann in verschiedenartiger Weise ausgebildet sein.

Eine bevorzugte Ausgestaltung sieht vor, dass der Grundkörper zumindest eine flache Tragplatte aufweist, an der der Hebel angelenkt ist, wobei in bevorzugter Weise ebenfalls vorgesehen ist, dass der Hebel aus Flachmaterial besteht.

In Weiterbildung des erfindungsgemäßen Grundkörpers kann vorgesehen sein, dass der Grundkörper eine Abdeckplatte aufweist, die auf der der Grundplatte abgewandten Seite des Hebels angeordnet ist und insbesondere auch zwischen Grund- und Abdeckplatte eine Distanzplatte angeordnet ist. Die Stärke des Hebels liegt dabei im wesentlichen in der Größenordnung der Stärkung der Distanzplatte oder etwas (im Toleranzbereich) unter dieser.

Die erfindungsgemäße Vorrichtung, d.h. Grundkörper und/oder Hebel können aus verschiedenartigen Materialien bestehen, sie bestehen vorzugsweise aus Kunststoff und/oder Metall.

Ebenfalls kann die Verbindung der Einzelteile des Grundkörpers in verschiedenartiger Weise erfolgen; hier kommen Verkleben, Verschweißen, Vernieten oder aber Verschrauben in Frage.

Eine weitere äußerst bevorzugte Ausgestaltung der Erfindung sieht vor, dass die Schwenkachse des Schweißhebels senkrecht zu einer Schwenkachse der zu schließenden Schellenteile gerichtet ist.

Insbesondere ergeben sich mit der erfindungsgemäßen Schließvorrichtung die folgenden Vorteile:

Beim Schließen erhöht sich die Schließkraft laufend durch die Hebelwirkung der erfindungsgemäß vorgesehenen Hebelausgestaltung.

Im geschlossenen Zustand ist der Verschluss über die Lagerstelle des Winkelhebels und den Sperrstift zweifach verriegelt.

Beim Schließen wird der Sperrstift durch eine Schrägung am Haken automatisch herangedrückt.

Zum Öffnen muss der. Sperrstift mittels eines spitzen Gegenstandes, wie eines Schraubenziehers oder dergleichen zu rückgedrückt werden, um eine Entriegelung zu ermöglichen.

Wenn der Hebel vollständig geöffnet ist, wird das zweite Schellenteil (Gegenlager) durch einen am Hebel ausgebildeten Exzenter aufgedrückt.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:
- Fig. 1: ein Schellenteil der erfindungsgemäßen Schelle mit eingelegtem Schutzschlauch sowie eingelegter Kabelnuss unter Weglassung des anderen Schellenteils in perspektivischer Darstellung;
- Fig. 2: den Gegenstand der Figur 1 in Draufsicht;
- Fig. 3: eine erfindungsgemäße Schelle als solche in perspektivischer Darstellung;
- Fig. 4: eine perspektivische Darstellung einer erfindungsgemäßen Schelle mit eingelegtem Schutzschlauch und eingelegter Kabelnuss in geöffnetem Zustand;
- Fig. 5: in perspektivischer Darstellung eine erfindungsgemäße Schelle mit eingelegtem Schutzschlauch und eingelegter Kabelnuss in Schließstellung;

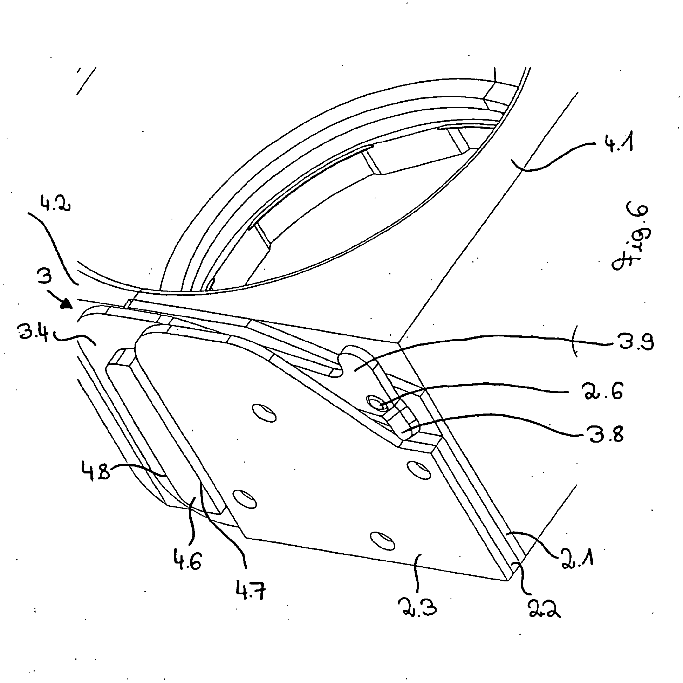

- Fig. 6: eine geschlossene erfindungsgemäße Schelle als solche in perspektivischer Darstellung;

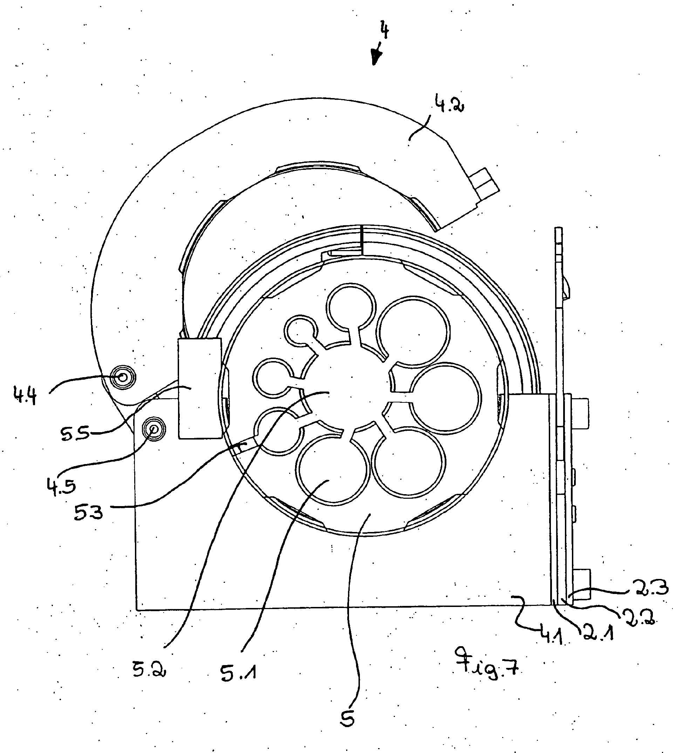

- Fig. 7: eine Stirnansicht einer erfindungsgemäßen Schelle mit eingelegtem Schutzschlauch und eingelegter Kabelnuss in Öffnungsstellung; und

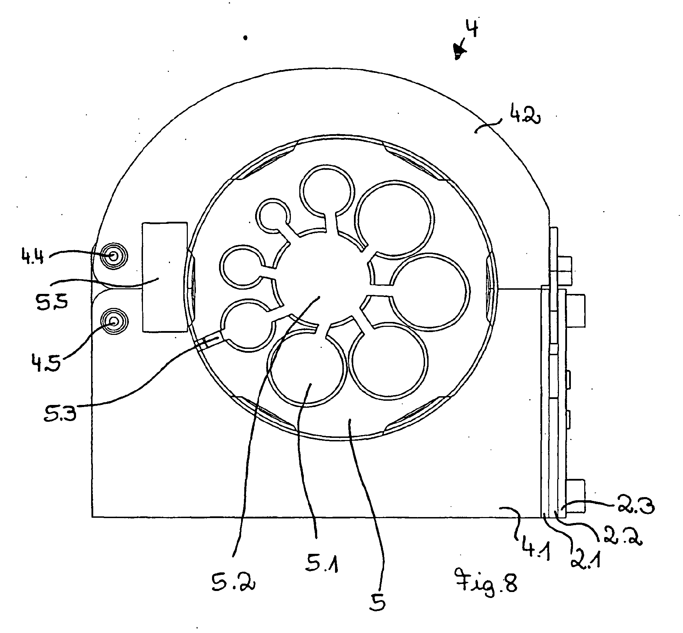

- Fig. 8: den Gegenstand der Figur 7 in Schließstellung.

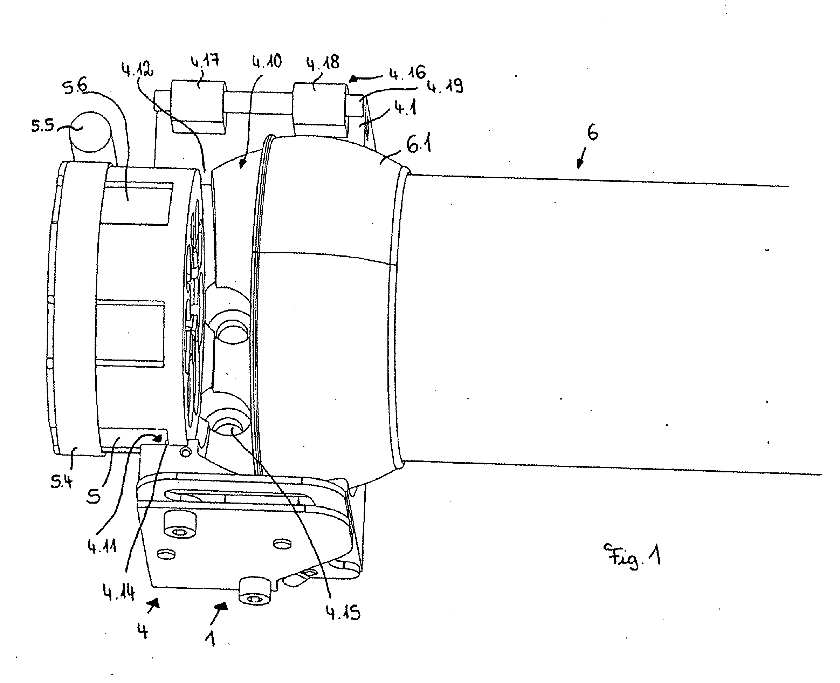

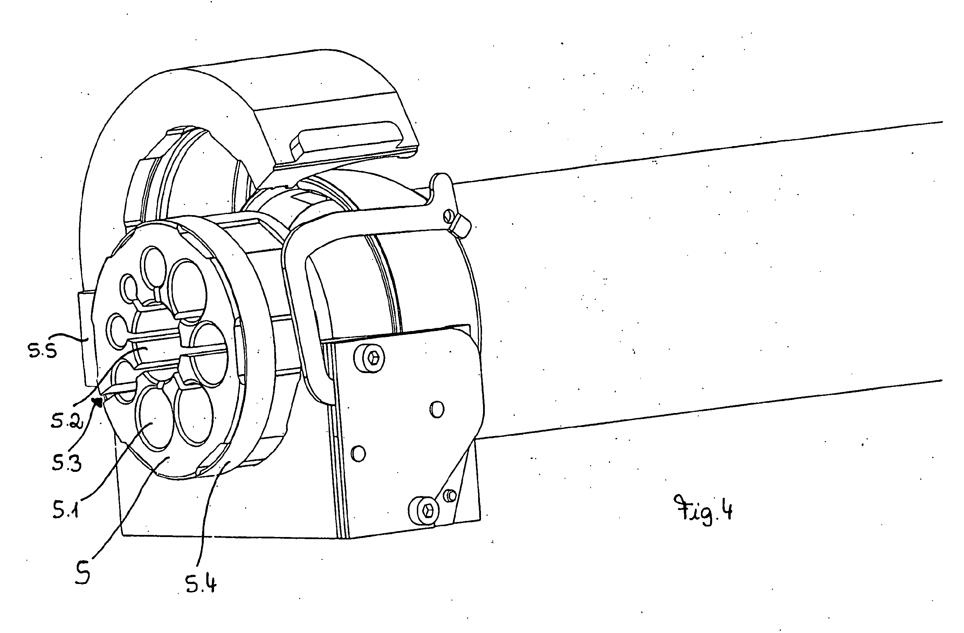

Eine erfindungsgemäße Schelle 4, von der lediglich die untere oder erste Halbschelle 4.1 in der Figur 1 dargestellt ist, dient zur Aufnahme sowohl einer Kabelnuss 5 als auch zur gelenkigen Aufnahme des Endes eines Schutzschlauches 6 für Versorgungsleitungen einer Maschine, insbesondere einem Roboter, insbesondere Versorgungsleitungen für ein an der Roboterhand angeordnetes Werkzeug. Die Schelle 4 ermöglicht dabei den Austritt oder Übergang der Versorgungsleitungen aus dem Schutzschlauch 6 vereinzelt zum Werkzeug hin unter Sicherstellung einer Zugentlastung. Zwecks letzterem weist die Kabelnuss 5 einzelne Durchbrüche 5.1 auf (beispielsweise Figur 4). Die einzelnen Durchbrüche 5.1 sind zu einem Zentraldurchbruch 5.2 hin offen. Die Kabelnuss 5 weist eine Teilung oder Grenzstelle 5.3 auf, durch die unter Aufbiegen der aus der Schelle 4 entnommenen elastischen Kabelnuss 5 die einzelnen Kabel seitlich in die Kabelnuss 5, zunächst in den Zentraldurchbruch 5.2 und von diesem in die einzelnen Durchbrüche 5.1 eingelegt werden können. Nach Einlegung der Kabel oder Versorgungsleitungen wird um die Kabelnuss 5 eine Spannschelle 5.4 gelegt und um die Kabelnuss 5 mittels eines Spannverschlusses 5.5 verspannt, wodurch die Kabel und Versorgungsleitungen in der Kabelnuss 5 kraftschlüssig gehalten werden.

Die Schelle 4 weist in Axialrichtung hintereinander zwei Aufnahmebereiche 4.10 und 4.11 auf, die durch einen über den Umfang in jeder der Schellenhälfte 4.1, 4.2 umlaufenden radial nach innen gerichteten Ringsteg 4.12 gegeneinander abgetrennt sind.

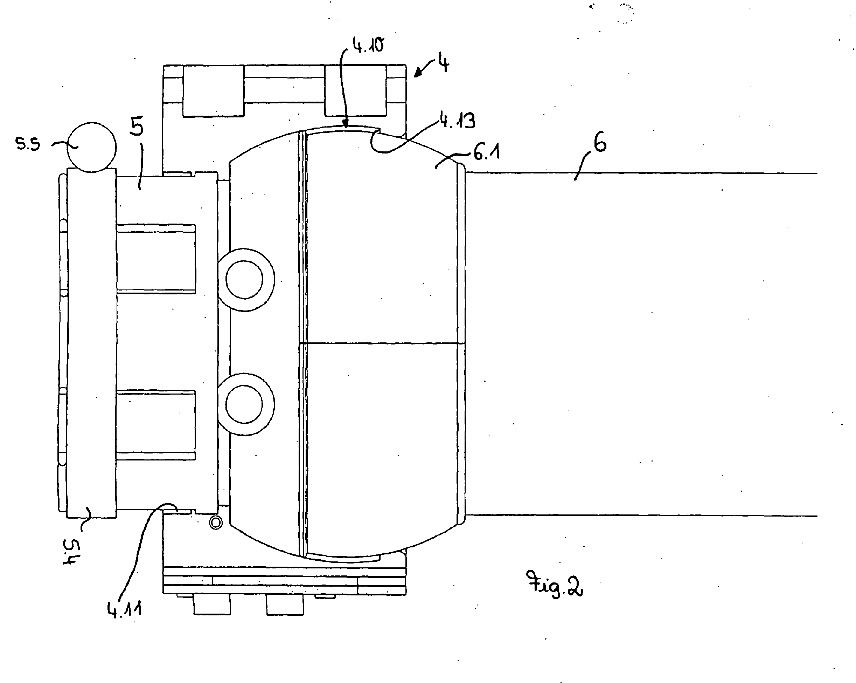

Der Aufnahmebereich 4.10 ist kalotten- oder teilkugelförmig ausgebildet und dient zur Aufnahme eines das Ende des Schutzschlauches 6 haltenden Kalottenteils 6.1. Zur Verhinderung eines Austretens des Kalottenteils 6.1 aus dem Aufnahmebereich 4.11 weist dieser zu seiner Außenseite hin eine hinterschnittene Schulter 4.13 auf (Figur 2). Die Kabelnuss 5 wird im anderen Aufnahmebereich 4.11 einerseits durch den Ringsteg 4.12, andererseits durch über den Umfang verteilte, einen relativen Umfangsabstand zueinander aufweisende Stege 4.14 gehalten, die einen endlichen Axialabstand zum Ringsteg 4.12 aufweisen. Die Stege 4.14 greifen in entsprechend über den Umfang der Kabelnuss 5 mit Umfangsabstand zueinander verteilte Ausnehmungen 5.6 ein. Die Schelle 4 kann mittels Bohrungen 4.15 am Boden des ersten Schellenteils 4.1 an die Maschine, entlang derer der Schutzschlauch 6 und die Versorgungsleitungen geführt werden sollen, mittels Schrauben (nicht dargestellt) befestigt werden.

Die Schellenteile 4.1, 4.2 sind über ein Doppelgelenkscharnier 4.16 miteinander gelenkig verbunden. Das Doppelgelenkscharnier 4.16 weist in Axialrichtung nebeneinander jeweils etwa auf axialer Höhe eines der Aufnahmebereiche 4.10, 4.11 angeordnete Gelenklaschen 4.17, 4.18 auf, die in jeder der Schellenhälften 4.1, 4.2 durch diese und die Gelenklaschen 4.17, 4.18 hindurchgesteckte Gelenkwellen 4.19 miteinander verbunden sind.

Zum Schließen der Schelle 4 an dem Doppelgelenk 4.16 diametral gegenüberliegenden Seite der beiden Schellenhälften 4.1, 4.2 ist eine Schließvorrichtung 1 vorgesehen.

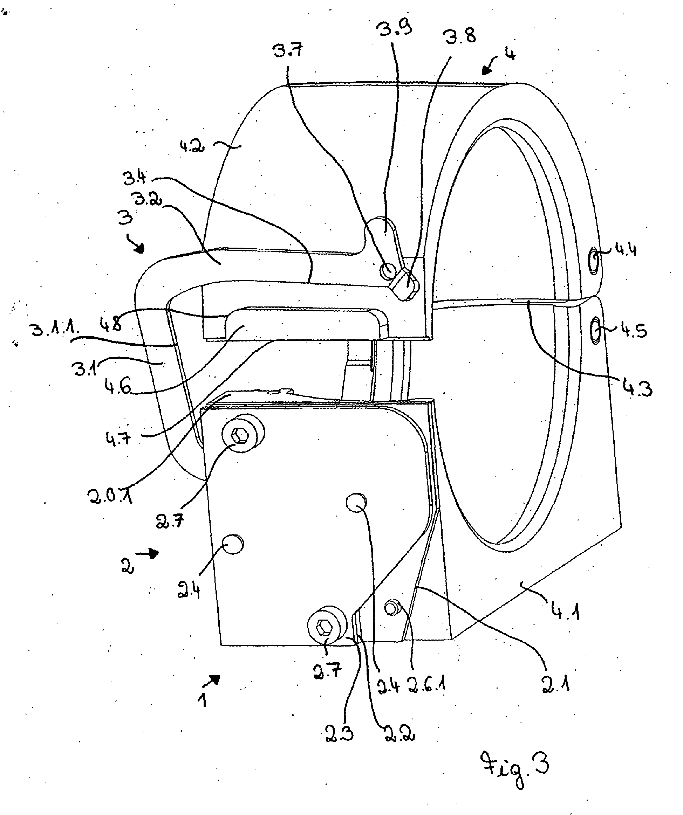

Die Schließvorrichtung 1 (insbesondere Fig. 3) weist zunächst einen Grundkörper 2 sowie einen an diesem schwenkbar angelenkten Hebel 3 auf. Der Grundkörper 2 besteht aus einer flachen Tragplatte 2.1, einer Distanzplatte 2.2 und einer Abdeckplatte 2.3. Die drei Platten sind fest miteinander verbunden, beispielsweise durch Verkleben, Verschweißen, Vernieten mittels Nieten 2.4. Die Distanzplatte 2.2 weist gegenüber Grund- und Abdeckplatte 2.1, 2.3 - hier - im linken oberen Bereich eine Ausnehmung 2.5 auf, in die der Schwenkhebel 3 eingreift. Der Schwenkhebel 3 besteht aus zwei Haupt-Hebelarmen 3.1, 3.2, die bei 3.3 etwa rechtwinklig miteinander verbunden sind bzw. ineinander übergehen. Ein dem ersten Hebelarm 3.1 abgewandter Abschnitt 3.4 des zweiten Hebelarmes 3.2 ist gegenüber dem rechten Winkel zurückgeneigt ausgebildet, so dass er mit dem Hebelarm 3.1 einen Winkel von weniger als 90°, beispielsweise zwischen 80 und 87° einschließt. Der Grundkörper 2 ist mittels Schraubenelementen 2.7 an einem zu schließenden Schellenteil befestigbar.

Der erste Hebelarm 3.1 weist an seinem dem zweiten Hebelarm 3.2 abgewandten Ende einen Ansatz 3.5 auf, der in die Ausnehmung 2.5 der Distanzplatte 2.2 eingreift und mittels einer Niete gelenkig am Grundkörper 2 - genau an der Grundplatte 2.1 - schwenkbar angelenkt ist. Der Ansatz 3.5 ist an seinem dem ersten Hebelarm 3.1 abgewandten Ende mit einem exzentrischen Nocken 3.6 versehen. Dieser Nocken dient dazu ein Widerlager des zweiten Schellenteils der beiden miteinander zu schließenden Schellenteil beim Öffnen vom Grundkörper 2 und damit das erste Schellenteil, an dem dieser befestigt ist, fortzudrücken.

Der zweite Hebelarm 3.2 weist an seinem dem ersten Hebelarm 3.1 abgewandten Ende eine Bohrung 3.7 als Teil einer Sperreinrichtung, einen Betätigungsansatz 3.9 sowie einen aus der Ebene des Hebels 3 leicht abgewinkelten Ansatz 3.8 auf. An der Tragplatte 2.1 ist als weiterer Teil der Sperreinrichtung ein in seiner Axialrichtung elastisch gelagerter Stift 2.6 angebracht, der beispielsweise durch eine in einem Gehäuse 2.7 angeordneten Feder über die der Abdeckplatte 2.3 zugewandte Fläche der Tragplatte 2.1 herausgedrückt wird.

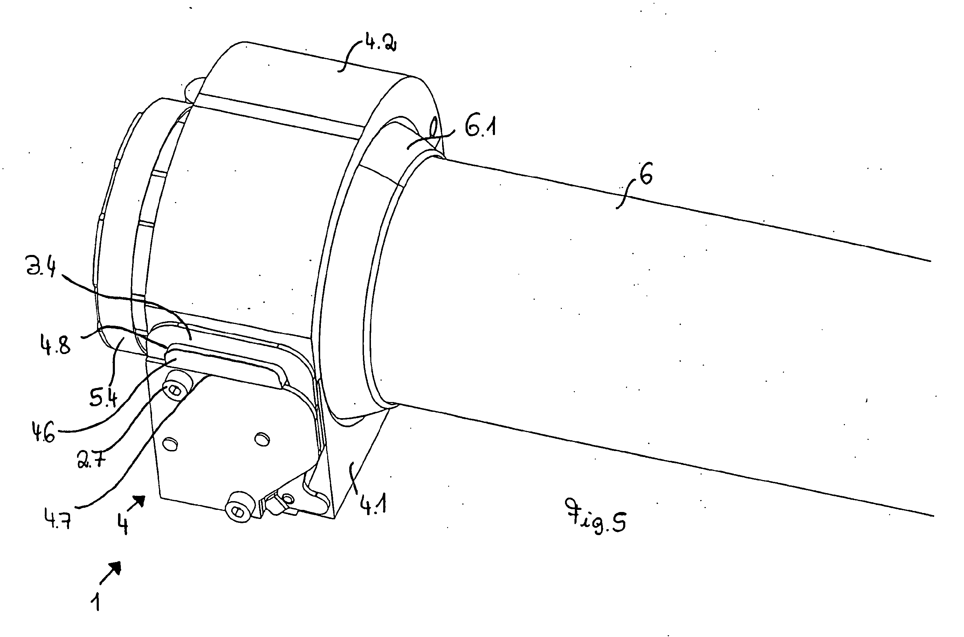

Wie sich aus Vorstehendem ergibt, ist der Schwenkhebel 3 in der Ebene der Distanzplatte 2.2 angeordnet und weist eine im wesentlichen dieser entsprechenden Stärke auf. Das freie Ende des Ansatzes 3.8 ragt etwa bis auf die Höhe der Fase 2.6.1 des Stiftes 2.6. Wird der Hebel 3 aus seiner in Figur 1 dargestellten Öffnungsstellung in seine Schließstellung gebracht (Figuren 2, 5), so streift das freie Ende des Ansatzes 3.8 zunächst über die Fase 2.6.1 des Stiftes 2.6 und drückt diesen bei weiterer Schließbewegung entgegen der auf ihn wirkenden Feder nach hinten, in die Tragplatte 2.1 hinein, bis die Bohrung 3.7 in konzentrischer Stellung zur Stiftposition gelangt, woraufhin der Stift 2.6 unter der Einwirkung der auf ihn wirkenden Feder in die Bohrung 3.7 hinein und damit in seine Ausgangsstellung hineinschnappen kann. Damit ist die erfindungsgemäße Vorrichtung zum Schließen zweier Schellenteile zuverlässig geschlossen.

Zum Öffnen muss der Stift 2.6 mittels eines.Werkzeugs wieder eingedrückt werden und der Hebel 3 in Öffnungsrichtung bewegt werden, bis der Kantenbereich der Bohrung 3.7 an der Fase 2.6.1 des Stiftes 2.6 anliegt. Da kann das Werkzeug entfernt und der Hebel unter weiterem Zurückdrücken des Stiftes 2.6 (über die Höhe der Fase) wieder geöffnet werden. Aus der die Schließstellung der erfindungsgemäßen Vorrichtung darstellenden Figur 2, aber auch der Figur 3 ist ersichtlich, dass in der Schließstellung die Oberkante 2.0.1 des Grundkörpers 2 und die dieser zugewandte Unterkante 3.1.1 des ersten Hebelarms 3.1 des Hebels 3 parallel zueinander verlaufen. In den zwischen den beiden genannten Kanten 2.0.1 und 3.1.1 genannten Zwischenraum greift ein am zweiten Schellenteil vorzusehendes Widerlager ein, so dass das zweite Schellenteil über dieses Widerlager in Schließstellung gegen das erste Schellenteil gedrückt wird (Figuren 3 bis 5).

Die Schließvorrichtung 1 ist mittels der Schräubelemente 2.7 - hier in Form von Inbusschrauben - an dem ersten Schellenteil 4.1 in einem dem Anlenkbereich gegenüberliegenden Bereich befestigt. Das zweite Schellenteil 4.2 weist an seinem freien - dem Anlenkbereich ebenfalls gegenüberliegenden - Ende auf der Außenseite ein Widerlager 4.6 auf, das auf seiner der freien Kante 4.7 des zweiten Schellenteils 4.2 abgewandten Eckbereichen mit Abrundungen 4.8 versehen ist.

Soll die Schelle 4 nun durch die Schließvorrichtung geschlossen werden, so greift, wenn der Hebel 3 aus seiner vollständigen Öffnungsstellung - Figur 1 - in eine erste Zwischen-Schließstellung gebracht wird, wie diese in Figur 3 dargestellt ist, der andere dem freien Ende zugewandte Bereich der Innenkante des Hebelarmabschnitts 3.4 an der rechten abgerundeten Kante 4.8 des Widerlagers 4.6 an und drückt bei weiterer Schließbewegung über das Widerlager 4.6 das zweite Schellenteil 4.1 gegen das erste Schellenteil 4.2, während der zweite Hebelarm 3.2, 3.4 an der rechten abgerundeten Kante 4.8 des Widerlagers 4.6 entlang gleitet, bis ein Bereich der Unterkante 3.1.1 des ersten Hebelarms 3.1 an der rechten abgerundeten Kante 4.8 des Widerlagers 4.6 zur Anlage kommt (etwa in Fig. 4) und derart ebenfalls am Widerlager 4.6 angreifend dieses und damit das zweite Schellenteil 4.2 gegen das erste Schellenteil 4.1 herunterdrückt. Bei weiterer Schließbewegung gelangt, wie schon unter Bezug auf Figur 1 beschrieben, die freie Kante des angewinkelten Ansatz 3.8 am zweiten Hebelarm 3.2 in den Bereich der Fase 2.6.1 des Stiftes 2.6, drückt diesen nach unten, bis er wieder in die Bohrung 3.7 einschnappen kann, womit der Schließvorgang vollendet ist.

### Bezugszeichenliste

- 1: Schließvorrichtung
- 2: Grundkörper
- 2.0.1: Oberkante des Grundkörpers
- 2.1: Tragplatte
- 2.2: Distanzplatte
- 2.3: Abdeckplatte
- 2.4: Nieten
- 2.5: Ausnehmung
- 2.6: Stift
- 2.6.1: Fase des Stifts
- 2.7: Schraubenelemente
- 2.8: Gehäuse
- 3: Hebel
- 3.1, 3.2: Hebelarme
- 3.1.1: Unterkante des Hebelarms 3.1
- 3.4: Abschnitt
- 3.5: abgewinkelter Ansatz des Hebelarms 3.1
- 3.6: exzentrischer Nocken
- 3.7: Bohrung
- 3.8: abgewinkelter Ansatz des Hebelarms 3.2
- 3.9: Betätigungsansatz

- 4: Schelle
- 4.1: untere Halbschelle
- 4.2: obere Halbschelle
- 4.4: Gelenk
- 4.5: Gelenk
- 4.6: Widerlager
- 4.7: freie Kante des Schellenteils 4.2
- 4.8: Eckbereiche mit Abrundungen
- 4.10, 4.11: Aufnahmebereiche
- 4.12: Ringsteg
- 4.13: Schulter
- 4.14: Stege
- 4.15: Bohrungen
- 4.16: Doppelgelenkscharnier
- 4.17, 4.18: Gelenklaschen
- 4.19: Gelenkwellen

- 5: Kabelnuss
- 5.1: Durchbrüche
- 5.2: Zentraldurchbruch
- 5.3: Teilung/Grenzstelle
- 5.4: Spannschelle
- 5.5: Spannverschluss
- 5.6: Ausnehmungen

- 6: Schutzschlauch
- 6.1: Kalöttenteil

- A: Schwenkachse

## Patentansprüche

1. Anordnung einer Schelle mit einem Zugentlastungsmittel für Einzelkabel und einem Schutzschlauch, wobei die Schelle einen Zugentlastungsmittel-Aufnahmebereich (4.11) aufweist, der das Zugentlastungsmittel für Einzelkabel aufnimmt, die aus dem angular beweglich gehaltenen Schutzschlauch herausgeführt sind, **dadurch gekennzeichnet, dass** ein Schutzschlauch-Aufnahmebereich (4.10), in dem ein an dem Schutzschlauch vorgesehenen teilkugelförmigen Ring angeordnet ist, innerhalb der Schelle axial hinter dem Zugentlastungsmittel-Aufnahmebereich (4.11) angeordnet ist, und dass beide Aufnahmebereiche (4.10, 4.11) durch einen umlaufenden radial nach innen gerichteten Ringsteg (4.12) voneinander getrennt sind.

2. Anordnung nach Anspruch 1, **dadurch gekennzeichnet, dass** in Axialabstand zum umlaufenden Ringsteg (4.12) zumindest einer der Aufnahmebereiche (4.10, 4.11) weitere radial nach innen gerichtete Stege (4.13, 4.14) aufweist.

3. Anordnung nach Anspruch 2, **dadurch gekennzeichnet, dass** ein Steg des ersten Aufnahmebereiches (4.10) durch eine nahe der Außenseite der Schelle (4) ausgebildete umlaufende Schulter (4.13) gebildet ist.

4. Anordung nach Anspruch 3, **dadurch gekennzeichnet, dass** im zweiten Aufnahmebereich über den Umfang der Schelle (4) hin mit in Umfangsrichtung endlichem Abstand mehrere Stege (4.14) nebeneinander angeordnet sind.

5. Anordnung nach einem der vorangehenden Ansprüche, **dadurch gekennzeichnet, dass** der erste Aufnahmebereich (4.10) teilkugelförmig ausgebildet ist.

6. Anordnung nach einem der vorangehenden Ansprüche, **gekennzeichnet durch** Befestigungsbohrungen zumindestens in einem Schellenteil.

7. Anordnung nach einem der vorangehenden Ansprüche, **gekennzeichnet durch** Verbindung zweier Schellenteile (4.1, 4.2) **durch** ein Doppelgelenk (4.15).

8. Anordnung nach einem der vorangehenden Ansprüche, **dadurch gekennzeichnet, dass** zwei Schellenteile (4.1, 4.2) durch in axialer Richtung nebeneinander angeordnete Gelenkelemente (4.16, 4.17) aneinander angelenkt sind.

9. Anordnung nach Anspruch 8, **dadurch gekennzeichnet, dass** die Gelenkelemente (4.16, 4.17) jeweils etwa auf axialer Höhe eines der Aufnahmebereiche (4.10, 4.11) angeordnet sind.

10. Anordnung nach einem der Ansprüche 7 bis 9, **gekennzeichnet durch** mit jeweils zwei Bohrungen versehenen Laschen (4.16, 4.17) als Gelenkelemente, **durch** die und **durch** die entsprechenden Schellenteile Gelenkwellen (18) hindurchgeführt sind.

11. Anordnung nach einem der vorangehenden Ansprüche, **gekennzeichnet durch** eine Schließvorrichtung zum Schließen zweier aneinander angelenkter Schellenteile (4.1, 4.2).

12. Anordnung nach Anspruch 11, **dadurch gekennzeichnet, dass** ein an einem Grundkörper (2) angelenkter, über ein Widerlager am zweiten Schellenteil dieses in Schließstellung gegen das erste Schellenteil drückender Hebel (3) zwei in etwa gleichlang ausgebildete winklig zueinander angeordnete Hebelarme (3.1, 3.2) aufweist, deren einer (3.1) an seinem freien Ende am Grundkörper (2) angelenkt ist, während der andere (3.2) mit seinem freien ende in Schließstellung am Grundkörper lösbar befestigbar ist.

13. Anordnung nach Anspruch 12, **dadurch gekennzeichnet, dass** die Hebelarme (3.1, 3.2) im wesentlichen mit einem Winkel von 90° zueinander ausgerichtet sind.

14. Anordnung nach Anspruch 12 oder 13, **dadurch gekennzeichnet, dass** der erste Hebelarm (3.1) über einen kurzen abgewinkelten Ansatz (3.5) am Grundkörper (2) angelenkt ist.

15. Anordnung nach Anspruch 14, **dadurch gekennzeichnet, dass** der abgewinkelte Ansatz (3.5) im wesentlichen parallel zum zweiten (3.2) Hebelarm verläuft.

16. Anordnung nach Anspruch 14 oder 15, **dadurch gekennzeichnet, dass** der abgewinkelte Ansatz (3.5) mit seinem freien Ende am Grundkörper (2) angelenkt ist.

17. Anordnung nach einem der Ansprüche 14 bis 16, **dadurch gekennzeichnet, dass** der abgewinkelte Ansatz (3.5) mit einem exzentrischen Nocken (3.6) im Bereich der Anlenkung versehen ist, der in maximaler Offenstellung des Hebels die Oberkante des Grundkörpers (2) überragt.

18. Anordnung nach einem der Ansprüche 12 bis 17, **gekennzeichnet durch** eine Sperreinrichtung in Form eines parallel zur Schwenkachse des Hebels ausgerichteten, nachgiebig gelagerten Stiftes (2.6) und eine diesen umgreifenden Bohrung (3.7) am freien Ende des Hebelarms.

19. Anordnung nach einem der Ansprüche 10 bis 15, **dadurch gekennzeichnet, dass** die Einzelteile des Grundkörpers (2) miteinander vernietet sind.

20. Anordnung nach einem der Ansprüche 12 bis 19, **dadurch gekennzeichnet, dass** der zweite Hebelarm (3.2) an seinem freien Ende einen Griffansatz aufweist.

21. Anordnung nach einem der Ansprüche 12 bis 20, **dadurch gekennzeichnet, dass** der Grundkörper (2) zumindest eine flache Tragplatte (2.1) aufweist, an der der Hebel (3) angelenkt ist.

22. Anordnung nach Anspruch 21, **dadurch gekennzeichnet, dass** der Grundkörper (2) eine Abdeckplatte (2.3) aufweist, die auf der der Grundplatte (2.1) abgewandten Seite des Hebels (3) angeordnet ist.

23. Anordnung nach Anspruch 22, **dadurch gekennzeichnet, dass** zwischen Grund- und Abdeckplatte (2.1, 2.3) eine Distanzplatte (2.2) angeordnet ist.

24. Anordnung nach einem der Ansprüche 12 bis 23, **dadurch gekennzeichnet, dass** Grundkörper (2) und/oder Hebel (3) aus Kunststoff bestehen.

25. Anordnung nach einem der Ansprüche 12 bis 24, **dadurch gekennzeichnet, dass** die Schwenkachse (A) des Schweißhebels (3) senkrecht zu einer Schwenkachse (A) der zu schließenden Schellenteile (4.1, 4.2) gerichtet ist.

26. Anordnung nach einem der vorangehenden Ansprüche, **dadurch gekennzeichnet, dass** das Zugentlastungsmittel eine Kabelnuss (5) ist.

## Claims

1. An assembly of a clamp with a pull-relief means for single cables and a protective hose, wherein the clamp comprises a pull-relief means receiving section (4.11), receiving the pull-relief means for single cables, which are run out from the protective hose, which is held moveable in angular direction, wherein a protective hose receiving section (4.10), in which a ring shaped as a partial sphere, provided at the protective hose, is disposed within the clamp, axially behind the pull-relief means receiving section (4.11), and both receiving sections (4.10, 4.11) are separated from each other through a circumferential radially inward facing annular bar (4.12).

2. An assembly according to claim 1, wherein at least one of the receiving sections (4.10, 4.11) has additional bars (4.13, 4.14) facing radially inward with an axial distance to the circumferential annular bar (4.12).

3. An assembly according to claim 2, wherein a bar of the first receiving area (4.10) is formed by a circumferential shoulder (4.13), which is formed close to the outside of the clamp (4).

4. An assembly according to claim 3, wherein several bars (4.14) are disposed in the second receiving section, distributed side by side over the circumference of the clamp (4) with a defined offset circumferential direction.

5. An assembly according to one of the preceding claims, wherein the first receiving section (4.10) is shaped as a partial sphere.

6. An assembly according to one of the preceding claims, wherein mounting holes are disposed in at least one component of the clamp.

7. An assembly according to one of the preceding claims, wherein two clamp parts (4.1, 4.2) are connected through a double joint (4.15).

8. An assembly according to one of the preceding claims, wherein two clamp components (4.1, 4.2) are moveably connected with each other through joint elements (4.16, 4.17), which are disposed next to each other in axial direction.

9. An assembly according to claim 8, wherein the joint elements (4.16, 4.17) are disposed respectively approximately at the axial elevation of one of the receiving sections (4.10, 4.11).

10. An assembly according to one of the claims 7 through 9, wherein ears (4.16, 4.17) with two bore holes each are provided as joint elements, wherein articulated shafts (18) are run through said joint elements and through the respective clamp components.

11. An assembly according to one of the preceding claims, **characterized by** a locking device for locking two clamp components (4.1, 4.2), joined together.

12. An assembly according to claim 11, wherein a lever (3), linked to a base body (2), presses the second clamp component in closed position against the first clamp component through a support at the second clamp component and has two lever arms (3.1, 3.2) of approximately the same length, which are disposed at an angle relative to each other, wherein one (3.1) of said arms is joined at the base body (2) with its free end, wherein the other one (3.2) can be removably connected at the base body with its free end in closed position.

13. An assembly according to claim 12, wherein the lever arms (3.1, 3.2) are aligned relative to each other at an angle of substantially 90°.

14. An assembly according to claim 12 or 13, wherein the first lever arm (3.1) is joined at the base body (2) through a short angled protrusion (3.5).

15. An assembly according to claim 14, wherein the angled protrusion (3.5) extends substantially parallel to the second lever arm (3.2).

16. An assembly according to claim 14 or 15, wherein the angled protrusion (3.5) is joined at the base body with its free end.

17. An assembly according to one of the claims 14 through 16, wherein the angled protrusion (3.5) is provided with an eccentric cam (3.6) in the section of the joint, which reaches above the upper edge of the base body (2) in maximum opening position of the lever.

18. An assembly according to one of the claims 12 through 17, wherein a blocking device is provided in the shape of a resiliently supported pin (2.6), aligned in parallel to the pivot axis of the lever, and a bore hole (3.7) in the free end of the lever arm, surrounding said pin.

19. An assembly according to one of the claims 10 through 15, wherein the single components of the base body (2) are riveted together.

20. An assembly according to one of the claims 12 through 19, wherein the second lever arm (3.2) has a handle grip at its free end.

21. An assembly according to one of the claims 12 through 20, wherein the base body (2) has at least a flat carrier plate (2.1), at which the lever (3) is joined.

22. An assembly according to claim 21, wherein the base body (2) has a cover plate (2.3), which is disposed on the side of the lever (3), facing away from the base plate (2.1).

23. An assembly according to claim 22, wherein a spacer plate (2.2) is disposed between base and cover plate (2.1, 2.3).

24. An assembly according to one of the claims 12 through 23, wherein the base body (2) and the lever (3) are made from plastic.

25. An assembly according to one of the claims 12 through 24, wherein the pivot axis (A) of the welded lever (3) is aligned perpendicular to a pivot axis (A) of the clamp components (4.1, 4.2) to be closed.

26. An assembly according to one of the preceding claims, wherein the tension release means is a cable grommet (5).

## Revendications

1. Arrangement de collier de serrage muni d'un moyen de décharge de traction pour câbles individuels et d'un flexible de protection, le collier présentant une zone de logement de moyen de décharge de traction (4.11) qui loge le moyen de décharge de traction de câbles individuels, guidés hors du flexible de protection maintenu en mouvement angulaire, **caractérisée en ce qu'**une zone de logement de flexible de protection (4.10) dans laquelle est disposée une bague en forme de sphère partielle prévue contre le flexible de protection est disposée à l'intérieur du collier, derrière la zone de logement de moyen de décharge de traction (4.11) dans le plan axial, et que les deux zones de logement (4.10, 4.11) sont séparées l'une de l'autre par une cloison annulaire (4.12) circonférentielle orientée vers l'intérieur dans le plan radial.

2. Arrangement selon la revendication 1, **caractérisée en ce qu'**au moins une des zones de logement (4.10, 4.11) présente des cloisons (4.13, 4.14) orientées vers l'intérieur dans le plan radial dans l'écartement axial avec la cloison annulaire (4.12) circonférentielle.

3. Arrangement selon la revendication 2, **caractérisée en ce qu'**une cloison de la première zone de logement (4.10) est formée à travers un épaulement (4.13) circonférentiel formé à proximité du côté extérieur du collier (4).

4. Arrangement selon la revendication 3, **caractérisée en ce que** plusieurs cloisons (4.14) sont disposées côte à côte dans la deuxième zone de logement en direction de la périphérie du collier (4) avec un écartement défini dans la direction de la périphérie.

5. Arrangement selon l'une quelconque des revendications précédentes, **caractérisée en ce que** la première zone de logement (4.10) prend une forme de sphère partielle.

6. Arrangement selon l'une quelconque des revendications précédentes, **caractérisée par** la présence d'alésages de fixation dans une partie du collier au moins.

7. Arrangement selon l'une quelconque des revendications précédentes, **caractérisée par** la liaison des deux parties de collier (4.1, 4.2) à l'aide d'une double articulation (4.15).

8. Arrangement selon l'une quelconque des revendications précédentes, **caractérisée en ce que** les deux parties de collier (4.1, 4.2) sont articulées entre elles à l'aide d'éléments articulés (4.16, 4.17) disposés côte à côte dans la direction axiale.

9. Arrangement selon la revendication 8, **caractérisée en ce que** les éléments articulés (4.16, 4.17) sont respectivement disposés à hauteur axiale d'une des zones de logement (4.10, 4.11).

10. Arrangement selon l'une quelconque des revendications 7 à 9, **caractérisée par** la présence de brides (4.16, 4.17) respectivement pourvues de deux alésages prenant la forme d'éléments articulés, les arbres de transmission (18) étant introduits à travers eux et à travers les parties de collier correspondantes.

11. Arrangement selon l'une quelconque des revendications précédentes, **caractérisée par** la présence d'un dispositif de fermeture destiné à fermer les deux parties de collier (4.1, 4.2) articulées entre elles.

12. Arrangement selon la revendication 11, **caractérisée en ce qu'**un levier (3) articulé à un corps de base (2) et appuyant la première partie de collier en position de fermeture contre la première partie de collier par l'intermédiaire d'un contre-palier disposé sur la deuxième partie de collier présente deux bras de levier (3.1, 3.2) de même longueur disposés en angle l'un par rapport à l'autre dont l'un (3.1) est articulé au corps de base (2) au niveau de son extrémité libre tandis que l'autre (3.2) peut être fixé de façon amovible sur le corps de base avec son extrémité libre en position de fermeture.

13. Arrangement selon la revendication 12, **caractérisée en ce que** les bras de levier (3.1, 3.2) sont orientés l'un par rapport à l'autre pour l'essentiel selon un angle de 90°.

14. Arrangement selon la revendication 12 ou 13, **caractérisée en ce que** le premier bras de levier (3.1) est articulé au corps de base (2) par l'intermédiaire d'une saillie coudée (3.5) courte.

15. Arrangement selon la revendication 14, **caractérisée en ce que** la saillie coudée (3.5) s'étend pour l'essentiel parallèlement au deuxième bras de levier (3.2).

16. Arrangement selon la revendication 14 ou 15, **caractérisée en ce que** la saillie coudée (3.5) est articulée au corps de base (2) avec son extrémité libre.

17. Arrangement selon l'une quelconque des revendications 14 à 16, **caractérisée en ce que** la saillie coudée (3.5) est pourvue d'une came excentrique (3.6) dans la zone de l'articulation, qui dépasse dans la position d'ouverture maximale du levier le bord supérieur du corps de base (2).

18. Arrangement selon l'une quelconque des revendications 12 à 17, **caractérisée par** la présence d'un dispositif de verrouillage prenant la forme d'une tige (2.6) disposée de façon élastique et orientée parallèlement à l'axe de pivotement du levier et d'un alésage (3.7) l'entourant au niveau de l'extrémité libre du bras de levier.

19. Arrangement selon l'une quelconque des revendications 10 à 15, **caractérisée en ce que** les parties individuelles du corps de base (2) sont rivetées entre elles.

20. Arrangement selon l'une quelconque des revendications 12 à 19, **caractérisée en ce que** le deuxième bras de levier (3.2) présente au niveau de son extrémité libre une saillie de préhension.

21. Arrangement selon l'une quelconque des revendications 12 à 20, **caractérisée en ce que** le corps de base (2) présente au moins une plaque d'appui (2.1) plane sur laquelle le levier (3) est articulé.

22. Arrangement selon la revendication 21, **caractérisée en ce que** le corps de base (2) présente une plaque de recouvrement (2.3) disposée sur le côté du levier (3) opposé à la plaque de base (2.1).

23. Arrangement selon la revendication 22, **caractérisée en ce qu'**une plaque d'écartement (2.2) est disposée entre les plaques de base et de recouvrement (2.1, 2.3).

24. Arrangement selon l'une quelconque des revendications 12 à 23, **caractérisée en ce que** le corps de base (2) et/ou le levier (3) sont en matière synthétique.

25. Arrangement selon l'une quelconque des revendications 12 à 24, **caractérisée en ce que** l'axe de pivotement (A) du levier de soudure (3) est orienté perpendiculairement à l'axe de pivotement (A) des parties de collier (4.1, 4.2) à fermer.

26. Arrangement selon l'une quelconque des revendications précédentes, **caractérisée en ce que** le moyen de décharge de traction est un écrou de câble (5).
